# EUROPEAN PATENT APPLICATION

(11) **EP 4 692 030 A1**
(43) Date of publication of application: **11.02.2026**
(21) Application number: 24780765.4
(22) Date of filing: 29.03.2024
(51) Int. Cl.: C05F 11/10, A01C 1/06, A01G 7/00, C08L 67/04, C08L 101/00, C08L 101/16, C12N 1/00, C12N 1/14, C12N 1/20

(54) **COMPOSITION FOR ACTIVATING RHIZOSPHERE MICROORGANISMS**

(30) Priority: 31.03.2023 JP 2023058464; 15.03.2024 JP 2024040810
(71) Applicant: Kaneka Corporation, Osaka-shi, Osaka 530-8288 (JP)
(72) Inventor: ASADA Takayuki, Iwata-shi, Shizuoka 438-0802 (JP); NOJIRI Masutoshi, Iwata-shi, Shizuoka 438-0802 (JP)
(74) Representative: Hoffmann Eitle
(86) International application number: PCT/JP2024/012954
(87) International publication number: WO 2024/204670

(57) **Abstract**

This invention provides a composition for rhizosphere microorganism activation that can efficiently activate rhizosphere microorganisms, a composition for plant growth promotion, a method for rhizosphere microorganism activation, a method for rhizosphere microorganism diversification, a method for plant production, a method for seed production, and seeds. Specifically, this invention relates to a composition for rhizosphere microorganism activation comprising a biodegradable polymer, a composition for plant growth promotion comprising a biodegradable polymer, a composition for soil improvement comprising a biodegradable polymer, a method for rhizosphere microorganism activation comprising a step of treating seeds with a composition comprising a biodegradable polymer, a method for rhizosphere microorganism diversification comprising a step of treating seeds with a composition comprising a biodegradable polymer, a method for plant production comprising a step of treating seeds with a composition comprising a biodegradable polymer to activate rhizosphere microorganisms, and a method for plant production comprising a step of treating seeds with a composition comprising a biodegradable polymer to promote plant growth.

## Description

### Technical Field

The present invention relates to a composition for rhizosphere microorganism activation, a composition for plant growth promotion, a composition for soil improvement, a method for rhizosphere microorganism activation, a method for rhizosphere microorganism diversification, and a method for plant production.

### Background Art

Rhizosphere microorganisms that inhabit the rhizosphere, which is a soil space influenced by secretion products from plant roots and soil microorganisms, are used as biofertilizers in the field of agricultural industry. In the days to come, a demand for sustainable and/or stable food supply is considered to be increasing.

Since efficient use of rhizosphere microorganisms leads to sustainable and/or stable food supply, rhizosphere microorganisms have attracted attention.

Among rhizosphere microorganisms, plant growth-promoting rhizobacteria (PGPR) (Non-patent literatures 1 and 2) and plant growth-promoting fungi (PGPF) (Non-patent literature 3) have been known as microorganisms that are useful for plant growth promotion.

Patent literature 1 discloses a biodegradable sheet for topsoil protection formed of randomly crossed biodegradable fibers.

However, Patent literature 1 does not describe or indicate that biodegradable fibers would influence rhizosphere microorganisms.

Accordingly, a composition for rhizosphere microorganism activation that can efficiently activate rhizosphere microorganisms is desired strongly.

### Citation List

### Patent literature

Patent literature 1: JP 2007-046351 A

### Non-patent literature

Non-patent literature 1: C. K. Jha and M. Saraf, E3 J. Agric. Res. Develop., Vol. 5 (2), pp. 108-119, April, 2015
Non-patent literature 2: M. Vocciante, et al., Appl. Sci. 2022, 12, 1231
Non-patent literature 3: A. A. Adedayo and O. O. Babalola, J. Fungi 2023, 9, 239

### Summary of Invention

### Technical Problem

The present invention aims to dissolve the various conventional problems described above and attain the objects described below. Specifically, the objects of the present invention are to provide a composition for rhizosphere microorganism activation that can efficiently activate rhizosphere microorganisms, a composition for plant growth promotion, a composition for soil improvement, a method for rhizosphere microorganism activation, a method for rhizosphere microorganism diversification, and a method for plant production.

### Solution to Problem

The present inventors have conducted concentrated studies in order to attain the above objects. As a result, they discovered that the present invention would provide a composition for rhizosphere microorganism activation that can efficiently activate rhizosphere microorganisms, a composition for plant growth promotion, a composition for soil improvement, a method for rhizosphere microorganism activation, a method for rhizosphere microorganism diversification, and a method for plant production with the use of a composition for rhizosphere microorganism activation comprising a biodegradable polymer, a composition for plant growth promotion comprising a biodegradable polymer, a composition for soil improvement comprising a biodegradable polymer, a method for rhizosphere microorganism activation comprising a step of treating seeds with a composition comprising a biodegradable polymer, a method for rhizosphere microorganism diversification comprising a step of treating seeds with a composition comprising a biodegradable polymer, a method for plant production comprising a step of treating seeds with a composition comprising a biodegradable polymer to activate rhizosphere microorganisms, or a method for plant production comprising a step of treating seeds with a composition comprising a biodegradable polymer to promote plant growth.

The present invention is based on the finding of the present inventors and provides the means for attaining the above objects as described below.

### Specifically,

<1> A composition for rhizosphere microorganism activation comprising a biodegradable polymer.
<2> A composition for plant growth promotion comprising a biodegradable polymer.
<3> A composition for soil improvement comprising a biodegradable polymer.
<4> A method for rhizosphere microorganism activation comprising a step of treating seeds with a composition comprising a biodegradable polymer.
<5> A method for rhizosphere microorganism diversification comprising a step of treating seeds with a composition comprising a biodegradable polymer.
<6> A method for plant production comprising a step of treating seeds with a composition comprising a biodegradable polymer to activate rhizosphere microorganisms.
<7> A method for plant production comprising a step of treating seeds with a composition comprising a biodegradable polymer to promote plant growth.
<8> A coated seed comprising a biodegradable polymer on the surface.

This disclosure incorporates the contents disclosed by JP Patent Application Nos. 2023-058464 and 2024-040810, based on which the priority of the present application claims.

### Advantageous Effects of Invention

According to the present invention, the various conventional problems described above can be dissolved and the objects described above can be attained. That is, the present invention can provide a composition for rhizosphere microorganism activation that can efficiently activate rhizosphere microorganisms, a composition for plant growth promotion, a composition for soil improvement, a method for rhizosphere microorganism activation, a method for rhizosphere microorganism diversification, and a method for plant production.

### Brief Description of Drawings

[Figure 1] Figure 1 shows a photograph of plants produced in Example 3 and Comparative Example 3.
[Figure 2] Figure 2 shows a photograph of plants produced in Reference Example 1 and Reference Example 2.
[Figure 3] Figure 3 shows a photograph of rhizospheric soil.
[Figure 4] Figure 4 shows a chart demonstrating the proportion of PGPR in the entire microorganisms in the rhizospheres of plants grown by seeding soybean seeds coated with PHBH and soybean seeds not coated with PHBH.

### Description of Embodiments

The compounds described herein include, in addition to liberated compounds, salts and solvates thereof, unless otherwise specified.

### (A composition for rhizosphere microorganism activation)

The composition for rhizosphere microorganism activation comprises a biodegradable polymer. The composition for rhizosphere microorganism activation can further comprise other components. The composition for rhizosphere microorganism activation having such features can be used to activate the target rhizosphere microorganisms.

When "activating rhizosphere microorganisms" herein, the composition exerts at least one of the effects i) to iii) indicated below:
i) An increase in the number of rhizosphere microorganisms, more specifically, an increase in the number of all rhizosphere microorganisms in a target rhizosphere;
ii) An increase in the proportion of plant growth-promoting microorganisms (PGPM), such as plant growth-promoting rhizobacteria (PGPR) and plant growth-promoting fungi (PGPF), more specifically, an increase in the proportion of PGPR and/or PGPF; and
iii) Diversifying rhizosphere microorganisms, specifically, an increase in microbial species growing in the target rhizosphere and/or an increase in the proportion of rhizosphere microorganisms in which each microorganism accounts for 1% or less of the rhizosphere microorganisms (rare species).

The term "the proportion in rhizosphere microorganisms" used herein refers to a percentage of the number of particular rhizosphere microorganisms accounting for the total number of rhizosphere microorganisms comprised in the rhizosphere. In the "rhizosphere microorganisms in which each microorganism accounts for 1% or less of the entire microorganisms," the number of each microorganism is 1% or less relative to the total number of rhizosphere microorganisms, which is designated to be 100%. An increase in the proportion of the rhizosphere microorganisms in which each microorganism accounts for 1% or less of the entire microorganisms indicates an increase in the proportion of the rhizosphere microorganisms in which each microorganism accounts for 1% or less of the entire microorganisms, relative to the total number of rhizosphere microorganisms (100%) comprised in the rhizosphere that is before activated or is not activated.

### - Biodegradable polymer -

The term "biodegradable polymer" used herein refers to a polymer that is degraded by microorganisms into a low-molecular-weight compound that would not adversely affect the environment in nature. In particular, a polymer that is completely consumed by microorganisms and selectively generates natural by-products, such as carbon dioxide, methane, water, or biomass, is preferable.

The term "biodegradable" used herein refers to a feature of a substance that can be degraded by microorganisms into a low-molecular-weight compound in nature. Specifically, biodegradable properties can be evaluated based on a test appropriate for each environment, such as ISO 14855 (compost) and ISO 14851 (activated sludge) under aerobic conditions and ISO 14853 (aqueous phase) and ISO 15985(solid phase) under anaerobic conditions. Degradability of microorganisms in sea water can be evaluated by assaying the amount of biochemical oxygen demand.

The biodegradable polymer is not particularly limited, provided that it has biodegradability, and an adequate polymer can be selected in accordance with the purpose of use. Examples thereof include a biomass (bioresource)-derived biodegradable polymer, a biomass (bioresource)- and fossil (petroleum)-derived biodegradable polymer, and a fossil (petroleum)-derived biodegradable polymer. From the viewpoint of efficient activation of rhizosphere microorganisms, a biomass (bioresource)-derived biodegradable polymer is particularly preferable.

A single type of the biodegradable polymer may be used by itself or two or more types thereof may be used in combination.

The biomass (bioresource)-derived biodegradable polymer is not particularly limited, and an adequate polymer can be selected in accordance with the purpose of use. Examples thereof include polylactic acid (PLA) and polyhydroxyalkanoate (PHA), with polyhydroxyalkanoate being particularly preferable.

The polyhydroxyalkanoate is not particularly limited and an adequate PHA can be selected in accordance with the purpose of use. Examples thereof include polyhydroxybutyrate (PHB), poly(3-hydroxybutyrate-co-3-hydroxyhexanoate) (PHBH), poly(3-hydroxybutyrate-co-3-hydroxyvalerate) (PHBV), and analogs thereof. From the viewpoint of efficient activation of rhizosphere microorganisms, poly(3-hydroxybutyrate-co-3-hydroxyhexanoate) (PHBH) is particularly preferable.

The biomass (bioresource)- and fossil (petroleum)-derived biodegradable polymer is not particularly limited and an adequate polymer can be selected in accordance with the purpose of use. Examples thereof include polybutylene succinate (PBS), a polybutylene adipate terephthalate-polylactic acid compound (PBAT-PLA compound), starch-polyester resin, and cellulose acetate (diacetate).

The fossil (petroleum)-derived biodegradable polymer is not particularly limited, and an adequate polymer can be selected in accordance with the purpose of use. Examples thereof include polyglycolide (PGA), polybutylene succinate (PBS), polybutylene succinate-CO-adipate(PBSA), polybutylene adipate terephthalate (PBAT), and polyethylene terephthalate succinate (PETS).

The biodegradable polymer can be obtained in accordance with a conventional technique. Alternatively, a commercially available product can also be used.

The form of the biodegradable polymer is not particularly limited, and an adequate form can be selected in accordance with the purpose, with the microparticulate form being preferable. The biodegradable polymer in the microparticulate form is not necessarily liquefied by heat fusion, dissolution in a solvent, or other means, and the polymer can be uniformly applied to the site of application in the solid form. After the biodegradable polymer in the microparticulate form is applied to the site of application, it can be maintained while refraining from substantially dropping out. Accordingly, the polymer can be applied to the site of application of plants, such as seeds, or soil without damaging the plants or soil by heat or a solvent. The term "microparticles" used herein refers to particles with a particle diameter of less than 1 mm described below.

The biodegradable polymer in the microparticulate form may be in the form of, for example, disperse particles that are dispersed in a solution (e.g., an aqueous solution) or a solvent medium (e.g., water) or dry particles that are dried by themselves or in combination with other components. It is preferable that the biodegradable polymer in the microparticulate form be not heated to 40°C or higher and applied to plants, such as seeds, or soil in the state of dispersed or dry particles. The term "solution" or "solvent medium" used herein refers to a substance that is not substantially capable of dissolving a biodegradable polymer, and it is clearly distinguished from the "solvent" that is capable of dissolving a biodegradable polymer.

The biodegradable polymer in the microparticulate form may be dispersed in a solution or solvent medium to prepare a slurry, paste, or the like without application of heat or a solvent. The dry particles may be prepared by, for example, dispersing the biodegradable polymer in the microparticulate form in a solvent medium (e.g., water) or a solution (e.g., an aqueous solution) to prepare a dispersion and drying the dispersion. Examples of the method for drying include spray drying and drum drying. The dry particles may be used in the solid form, or they may be dispersed in a solvent medium or solution immediately before use and used in that state.

The term "particle diameter" used herein refers to an average particle diameter, and, more specifically, the term refers to a particle diameter that is equivalent to a cumulative 50% point of diameter of the total number of normally distributed particles measured by adjusting the concentration of a water suspension of microparticles to a given level with the use of a commercially available particle size analyzer, such as a particle tracking particle size analyzer (e.g., HORIBA, Ltd.).

The lower limit of the particle diameter of the biodegradable polymer is not particularly limited, and an adequate diameter can be selected in accordance with the purpose. In order to uniformly apply the polymer to plants, such as seeds, or soil, the particle diameter is preferably 0.1 µm or more, more preferably 0.5 µm or more, further preferably 1 µm or more, particularly preferably 1.5 µm or more, and most preferably 2 µm or more. The upper limit of the particle diameter of the biodegradable polymer is not particularly limited, and an adequate diameter can be selected in accordance with the purpose. In order to uniformly apply the polymer to plants, such as seeds, or soil, the particle diameter is preferably 500 µm or less, more preferably 300 µm or less, further preferably 200 µm or less, particularly preferably 180 µm or less, and most preferably 160 µm or less. In order to uniformly apply the polymer to plants, such as seeds, or soil, in particular, the particle diameter is preferably 0.1 µm to 500 µm, more preferably 0.5 µm to 300 µm, further preferably 1 µm to 200 µm, particularly preferably 1.5 µm to 180 µm, and most preferably 2 µm to 160 µm.

When using the biodegradable polymer, it is preferable that heat be not applied to the biodegradable polymer in order to refrain from damaging plants, such as seeds, or soil. When using the biodegradable polymer, it is preferable that a solvent be not added to the biodegradable polymer in order to refrain from damaging plants, such as seeds, or soil.

The lower limit of the content of the biodegradable polymer in 100% by mass of the composition for rhizosphere microorganism activation is not particularly limited, and an adequate content can be selected in accordance with the purpose. In order to efficiently activate rhizosphere microorganisms, the content is preferably 0.0001% by mass or more, more preferably 0.001% by mass or more, further preferably 0.002% by mass or more, particularly preferably 0.005% by mass or more, and most preferably 0.01% by mass or more.

The upper limit of the content of the biodegradable polymer in 100% by mass of the composition for rhizosphere microorganism activation is not particularly limited, and an adequate content can be selected in accordance with the purpose. In order to efficiently activate rhizosphere microorganisms, the content is preferably 80% by mass or less, more preferably 70% by mass or less, further preferably 60% by mass or less, particularly preferably 55% by mass or less, and most preferably 50% by mass or less.

In order to efficiently activate rhizosphere microorganisms, in particular, the content is preferably 0.0001% by mass to 80% by mass, more preferably 0.001 % by mass to 70% by mass, further preferably 0.002% by mass to 60% by mass, particularly preferably 0.005% by mass to 55% by mass, and most preferably 0.01% by mass to 50% by mass.

Specifically, the composition for rhizosphere microorganism activation comprises components other than the biodegradable polymer (i.e., other components) in an amount of preferably 20% by mass to 99.9999% by mass, more preferably 30% by mass to 99.999% by mass, further preferably 40% by mass to 99.998% by mass, particularly preferably 45% by mass to 99.995% by mass, and most preferably 50% by mass to 99.99% by mass.

### -Other components-

The other components are not particularly limited, and adequate components can be selected in accordance with the purpose of use. Examples thereof include a carrier, an additive, and a fertilizer component.

A single type of the other component may be used by itself, or two or more types of the other components may be used in combination.

The carrier is not particularly limited, and an adequate carrier can be selected in accordance with the purpose of use. Examples thereof include a liquid carrier and a solid carrier. When using the biodegradable polymer in the form of disperse particles, a liquid carrier can be used as a solution or solvent medium. When using the biodegradable polymer in the form of dry particles, a solid carrier can be used.

The liquid carrier is not particularly limited, and an adequate liquid carrier can be selected in accordance with the purpose of use. Examples thereof include water and an organic solvent medium. Examples of the organic solvent medium include methyl ether, ethyl ether, propyl ether, and butyl ether. It is preferable that the liquid carrier do not contain an organic solvent medium in order to refrain from damaging plants, such as seeds, or soil.

Water used as the carrier is not limited to pure water. An aqueous solution, aqueous suspension, aqueous gel, or aqueous slurry may be used, and viscous water may also be used.

An organic solvent medium used as the carrier is not limited to a pure organic solvent medium. An organic-solvent medium-based solution, suspension, gel, or slurry may be used, and a viscous solvent medium may also be used.

The solid carrier is not particularly limited, and an adequate solid carrier can be selected in accordance with the purpose of use. An example thereof is a hydrated substance. The solid carrier can be in a powdery or granular form.

The hydrated substance is not particularly limited, and an adequate substance can be selected in accordance with the purpose of use. Examples thereof include polyvinylpyrrolidone, alkylene oxide random and block copolymers, vinyl acetate/vinyl pyrrolidone copolymers, alkylated vinyl pyrrolidone copolymers, polyalkylene glycol including polypropylene glycol and polyethylene glycol, polyvinyl acetate, polyvinyl alcohol, gelatin, agar, gum Arabic, karaya gum, gum tragacanth, guar gum, Locust bean gum, xanthan gum, ghatti gum, carragheenan, alginate, casein, dextran, pectin, chitin, 2-hydroxyethyl starch, 2-aminoethyl starch, 2-hydroxyethyl cellulose, methyl cellulose, carboxymethylcellulose sodium, cellulose sulfate, polyacrylamide, alkali metal salt of maleic anhydride copolymers, and alkali metal salt of poly(meth)acrylic acid.

A single type of the carrier may be used by itself, or two or more types of the carriers may be used in combination.

The additives are not particularly limited, and adequate additives can be selected in accordance with the purpose of use. Examples thereof include a moisturizing agent, a dispersant, a colorant, a defoaming agent, an UV protective agent, an antifreezing agent, a preservative, a biological control agent, a biocide, an emulsifier, an extender, a scavenger, a plasticizer, a phospholipid, a fluidizing agent, a coalescing agent, wax, and/or a filler (e.g., cray, talc, glass fiber, cellulose, and pulverized wood material).

The form of the composition for rhizosphere microorganism activation is not particularly limited, and an adequate form can be selected in accordance with the purpose. Examples thereof include a slurry or paste comprising the biodegradable polymer in the form of disperse particles dispersed in a solution or solvent medium, dry particles prepared by drying the biodegradable polymer by itself or in combination with other components, a solution of the biodegradable polymer, and a molten solution of the biodegradable polymer. Among them, a slurry or paste or dry particles are particularly preferable because of the unnecessity of heat or a solvent to dissolve or melt the composition.

### -Rhizosphere microorganisms-

The composition for rhizosphere microorganism activation can be used to activate the rhizosphere microorganisms. The term "rhizosphere microorganisms" refers to microorganisms that inhabit the rhizosphere. The rhizosphere is a soil space influenced by secretion products from plant roots and soil microorganisms, and the rhizosphere includes the inner rhizosphere, which is the inner environment of a root, such as the intercellular space of the epidermis or the cortical layer of the root, the rhizoplane, which is the root surface, and the outer rhizosphere, which is the soil area around the root.

The microorganisms are not particularly limited, and adequate microorganisms can be selected in accordance with the purpose of use. Examples thereof include bacteria and fungi. It is particularly preferable that plant growth-promoting microorganisms (PGPM), such as plant growth-promoting rhizobacteria (PGPR) and plant growth-promoting fungi (PGPF), be activated.

The term "plant growth-promoting rhizobacteria (PGPR)" used herein refers to bacteria that exist in the plant rhizosphere and have useful functions for plant growth promotion. PGPR is not particularly limited, provided that it has properties and functions described above. Examples thereof include bacteria described in Non-patent literature 1 and Non-patent literature 2. Other examples include bacteria having functions of nitrogen fixation, phosphorus solubilization, potassium solubilization, phytohormone production, exopolysaccharide (EPS) production, siderophore production, and 1-aminocyclopropane-1-carboxylate (ACC) deaminase production.

The plant growth-promoting rhizobacteria (PGPR) having functions of nitrogen fixation are not particularly limited, and adequate bacteria can be selected in accordance with the purpose of use. Examples thereof include *Acetobacter, Anabaena, Azoarcus, Azospirillum, Azotobacter, Bradyrhizobium, Burkhorderia, Clostridium, Diazotrophicus, Enterobacter, Frankia, Gluconoacetobacter, Mesorhizobium, Methylobacterium, Nostoc, Pseudomonas, Rhizobium,* and *Sinorhizobium.*

The plant growth-promoting rhizobacteria (PGPR) having functions of phosphorus solubilization are not particularly limited, and adequate bacteria can be selected in accordance with the purpose of use. Examples thereof include *Achromobacter, Agrobacterium, Arthrobacter, Bacillus, Beijerinckia, Burkholderia, Citrobacter, Delftia, Enterobacter, Erwinia, Escherichia, Flavobacterium, Klebsiella, Microbacterium, Mycobacterium, Phyllobacterium, Proteis, Pseudomonas, Rhizobium, Rhodococcus,* and *Serratia.*

The plant growth-promoting rhizobacteria (PGPR) having functions of potassium solubilization are not particularly limited, and adequate bacteria can be selected in accordance with the purpose of use. Examples thereof include *Acidothiobacillus, Bacillus, Burkholderia, Paenibacillus,* and *Pseudomonas.*

The plant growth-promoting rhizobacteria (PGPR) having functions of phytohormone production are not particularly limited, and adequate bacteria can be selected in accordance with the purpose of use. Examples thereof include *Acetobacter, Agrobacterium, Alkaliigenes, Azospirillum, Azotobacter, Bacillus, Bradyrhizobium, Enterobacter, Herbaspirillum, Klebsiella, Paenibacillus, Pantoea, Pseudomonas, Rhizobium, Rhodospirillum,* and *Xanthomonas.*

The plant growth-promoting rhizobacteria (PGPR) having functions of exopolysaccharide (EPS) production are not particularly limited, and adequate bacteria can be selected in accordance with the purpose of use. Examples thereof include *Bacillus, Pseudomonas, Streptococcus, Vibrio, Serratia,* and *Escherichia.*

The plant growth-promoting rhizobacteria (PGPR) having functions of siderophore production are not particularly limited, and adequate bacteria can be selected in accordance with the purpose of use. Examples thereof include *Aeromonas, Azadirachta, Azotobacter, Bacillus, Burkholderia, Pseudomonas, Rhizobium, Serratia,* and *Streptomyces.*

The plant growth-promoting rhizobacteria (PGPR) having functions of 1-aminocyclopropane-1-carboxylate (ACC) deaminase production are not particularly limited, and adequate bacteria can be selected in accordance with the purpose of use. Examples thereof include *Aeromonas, Azadirachta, Azotobacter, Bacillus, Burkholderia, Pseudomonas, Rhizobium, Serratia,* and *Streptomyces.*

Other plant growth-promoting rhizobacteria (PGPR) are not particularly limited, and adequate bacteria can be selected in accordance with the purpose of use. Examples thereof include *Acetobacter, Alcaligenes, Arthrobacter, Derxia, Devosia, Enterobacter, Gluconacetobacter, Ochrobactrum, Pantoea, Stenotrophomonas,* and *Zoogloea.*

The term "plant growth-promoting fungi (PGPF)" refers to fungi that mainly exist in the plant rhizosphere and have useful functions for plant growth promotion. PGPF is not particularly limited, provided that it has properties and functions described above. Examples thereof include fungi described in Non-patent literature 3. Other examples include fungi having functions of nitrogen fixation, phosphorus solubilization, potassium solubilization, phytohormone production, exopolysaccharide (EPS) production, siderophore production, and 1-aminocyclopropane-1-carboxylate (ACC) deaminase production. Specific examples thereof include *Aspergillus, Fusarium, Gliocladium, Mortierella, Penicillium, Phoma, Piriformospora, Tricoderma,* and *Rhizoctonia.*

### -Plant growth promotion-

The composition for rhizosphere microorganism activation activates rhizosphere microorganisms surrounding plants and, as a consequence, it can promote growth of the plants. Accordingly, such composition can be used for plant growth promotion.

The growth is not particularly limited, and adequate growth can be selected in accordance with the purpose, with the initial growth being preferable. The term "initial growth" refers to a period from germination to the middle of the vegetative growth stage at which production of dry matter begins to rapidly increase. For example, the initial growth is growth within 90, 60, 30, 25, 21, or 14 days after germination.

The composition for rhizosphere microorganism activation may be applied directly to plants or soil, or the composition may be mixed with a microbial material, a soil conditioner, such as biocarbon, or a bactericide/insecticide and applied to (treat) plants or soil. The composition for rhizosphere microorganism activation may be adequately diluted with water or the like and applied to (treat) plants or soil.

The composition is preferably applied to (treat) plants, such as leaves, seeds, seedlings, or fruits, and the composition is more preferably used for seed treatment.

The method for seed treatment is not particularly limited, provided that the biodegradable polymer can be uniformly applied to the seed surface. An adequate method can be selected in accordance with the purpose. For example, the composition for rhizosphere microorganism activation in the liquid form (e.g., a slurry) can be applied by coating or soaking plants. Alternatively, the composition for rhizosphere microorganism activation in the solid form (e.g., dry particles) can be sprayed on plants. In order to efficiently activate rhizosphere microorganisms, in particular, the method of coating plants with the composition for rhizosphere microorganism activation in the liquid form is preferable, the method of uniformly coating plants with the composition for rhizosphere microorganism activation while rotating seeds is more preferable, and the method of uniformly coating plants with the composition for rhizosphere microorganism activation while rotating dry seeds at a high speed is further preferable.

The composition for rhizosphere microorganism activation can efficiently activate the rhizosphere microorganisms by treating, in particular, seeds.

The composition for rhizosphere microorganism activation is used for, in particular, seed treatment or seed coating. Thus, the composition can activate the rhizosphere microorganisms.

When seeds are the target of treatment, the amount of the composition for rhizosphere microorganism activation used is not particularly limited, and an adequate amount can be selected in accordance with the purpose. For example, the amount of the composition used per ton of the seeds is adjusted to contain the biodegradable polymer in an amount of preferably at least 0.1 g, more preferably at least 0.2 g, and further preferably at least 0.5 g, so as to efficiently activate rhizosphere microorganisms. The amount of the composition used per ton of the seeds is adjusted to contain the biodegradable polymer in an amount of preferably 5,000 g at most, more preferably 3,000 g at most, and further preferably 2,000 g at most, in order to efficiently activate rhizosphere microorganisms.

In order to efficiently activate rhizosphere microorganisms, in particular, the amount of the composition used per ton of the seeds is adjusted to contain the biodegradable polymer in an amount of preferably 0.1 g to 5,000 g, more preferably 0.2 g to 3,000 g, and further preferably 0.5 g to 2,000 g.

The seeds are not particularly limited, and adequate seeds can be selected in accordance with the purpose of use. Examples thereof include seeds of gymnosperms and seeds of angiosperms, with the seeds of angiosperms being preferable.

The angiosperms are not particularly limited, and adequate angiosperms can be selected in accordance with the purpose of use. Examples thereof include plants of *Gramineae, Liliaceae, Musaceae, Bromeliaceae, Orchidaceae, Brassicaceae, Leguminosae, Solanaceae, Cucurbitaceae, Convolvulaceae, Rosaceae, Moraceae, Malvaceae, Compositae, Amaranthaceae,* and *Polygonaceae,* with the plants of *Leguminosae* or *Gramineae* being particularly preferable.

Examples of the plants of *Gramineae* include rice, wheat, barley, corn or maize, *Avena sativa, Zoysia,* sorghum, rye, *Setaria italica,* and *Saccharum officinarum.*

Examples of the plants of *Liliaceae* include *Allium fistulosum* and *Asparagus officinalis.*

Examples of the plants of *Musaceae* include *Musa paradisiaca.*

Examples of the plants of *Bromeliaceae* include *Annas comosus.*

Examples of the plants of *Orchidaceae* include orchids.

Examples of the plants of *Brassicaceae* include *Arabidopsis thaliana,* Chinese cabbage, rapeseed (OSR), *Brassica oleracea,* cauliflower, and Japanese radish.

Examples of the plants of *Leguminosae* include soybean, *Phaseolus angularis, Phaseolus vulgaris, Pisum sativum, Vigna sinensis,* and alfalfa.

Examples of the plants of *Solanaceae* include *Solanum lycopersicum, Solanum melongena, Solanum tuberosum, nicotiana tabacum,* and *Capsicum annum.*

Examples of the plants of *Cucurbitaceae* include *Cucumis melo, Cucumis sativus,* melon, and *Citrullus battich.*

Examples of the plants of *Convolvulaceae* include *Pharbitis nil, Ipomoea batatas,* and *Calystegia japonica.*

Examples of the plants of *Rosaceae* include rose, strawberry, and apple.

Examples of the plants of *Moraceae* include mulberry, *Ficus caric,* and *Hevea brasiliensis.*

Examples of the plants of *Malvaceae* include cotton and kenaf.

Examples of the plants of *Compositae* include lettuce and sunflower.

Examples of the plants of *Amaranthaceae* include sugarbeet (*Beta vulgaris*)*.*

Examples of the plants of *Polygonaceae* include buckwheat.

A method for producing the composition for rhizosphere microorganism activation is not particularly limited, and an adequate method can be selected in accordance with the purpose. An example thereof is a method comprising mixing a biodegradable polymer and other components and stirring the mixture to homogeneity.

### (The composition for plant growth promotion)

The composition for plant growth promotion comprises a biodegradable polymer. The composition for plant growth promotion can further comprise other components. The composition for plant growth promotion is used to exert effects on useful plants, such as effects of accelerating the growth rate and increasing the weight of the entire plant body or useful part (e.g., fruit or leaves), at the time of maturity. The growth is not particularly limited, and adequate growth can be selected in accordance with the purpose, with the initial growth being preferable. The term "initial growth" refers to a period from germination to the middle of the vegetative growth stage at which production of dry matter begins to rapidly increase. For example, the initial growth is growth within 90, 60, 30, 25, 21, or 14 days after germination. The target of application, the method of application, and other conditions are not particularly limited, provided that the effects are exerted. The composition may be applied directly to plants or soil, or the composition may be mixed with a microbial material, a soil conditioner, such as biocarbon, or a bactericide/insecticide and applied to plants or soil. The composition is preferably applied to leaves, seeds, seedlings, or fruits of plants, and the composition is more preferably used for seed treatment. The composition for plant growth promotion may act to activate rhizosphere microorganisms and, as a consequence, exert the effects of plant growth promotion.

Conditions of the composition for plant growth promotion, such as the components, the constitution, and the method of application, are as described in the (The composition for rhizosphere microorganism activation) section above, unless otherwise specified or inconsistent with the context.

### (The composition for soil improvement)

The composition for soil improvement comprises a biodegradable polymer. The composition for soil improvement can further comprise other components. The composition for soil improvement is used to improve the soil conditions so as to enable satisfactory plant growth. Specifically, the composition for soil improvement exerts effects on soil containing the composition, such as effects of accelerating the growth rate of useful plants or effects of increasing the weight of the entire plant body or useful part (e.g., fruit or leaves), at the time of maturity, compared with soil not containing the composition. The target of application, the method of application, and other conditions are not particularly limited, provided that the effects are exerted. The composition may be applied directly to soil or plants to be grown in the soil (e.g., seeds), or the composition may be mixed with a microbial material, a soil conditioner, such as biocarbon, or a bactericide/insecticide and applied to soil or plants to be grown in the soil (e.g., seeds). When the composition for soil improvement is applied to soil, the composition may be mixed with the whole or a part of soil. Since the composition is preferably used to improve the soil in the plant rhizosphere and in the vicinity thereof, it is particularly preferable that application of the composition be concentrated on soil in the plant rhizosphere and in the vicinity thereof.

Conditions of the composition for plant growth promotion, such as the components, the constitution, and the method of application, are as described in the (The composition for rhizosphere microorganism activation) section above, unless otherwise specified or inconsistent with the context.

### (The method for rhizosphere microorganism activation)

The method for rhizosphere microorganism activation comprises a step of treating seeds with a composition comprising a biodegradable polymer. The method for rhizosphere microorganism activation can further comprise other steps. Specifically, the term "the composition comprising the biodegradable polymer" used herein refers to the composition described in the (The composition for rhizosphere microorganism activation) section above. The other steps are not particularly limited, and an example thereof is a step of seeding the seeds treated with the composition in soil. The method for rhizosphere microorganism activation can exert effects on plants grown from the seeds, such as effects of accelerating the growth rate thereof or effects of increasing the weight of the entire plant body or useful part (e.g., fruit or leaves), at the time of maturity.

### -The step of treating seeds with a composition comprising a biodegradable polymer-

The composition comprising a biodegradable polymer comprises a biodegradable polymer, and such composition can further comprise other components.

Specific conditions, such as the biodegradable polymer, other components, the constitution, the method of production, seeds, and seed treatment, are as described in the (The composition for rhizosphere microorganism activation) section above, unless otherwise specified or inconsistent with the context.

### -Other step-

The other step is not particularly limited, and an adequate step can be selected in accordance with the purpose. An example thereof is a step of seeding the seeds treated with the composition in soil. By seeding the seeds treated with the composition in soil, in particular, microorganisms that inhabit the rhizospheres of plants grown from such seeds are activated. It is preferable that the number of rhizosphere microorganisms in which each microorganism accounts for 1% or less of the entire microorganisms be increased. More specifically, it is preferable that a wider variety of rhizosphere microorganisms exist in the rhizosphere. By seeding the seeds treated with the composition in soil, the proportion of the rhizosphere microorganisms that each microorganism accounts for 1% or less of the entire microorganisms can be increased.

The soil is preferably microorganism-containing soil. Microorganism-containing soil is not particularly limited, and adequate soil, such as natural soil, commercially available conditioned soil, or compost-containing/compost-free soil, can be selected in accordance with the purpose of use. Soil containing useful microorganisms (e.g., PGPR or PGPF) is particularly preferable.

### (The method for rhizosphere microorganism diversification)

The method for rhizosphere microorganism diversification comprises a step of treating seeds with a composition comprising a biodegradable polymer. The method can further comprise other steps. Specifically, the term "the composition comprising the biodegradable polymer" used herein refers to the composition described in the (The composition for rhizosphere microorganism activation) section above. The other step is not particularly limited, and an example thereof is the step of seeding the seeds treated with the composition in soil. According to the method for rhizosphere microorganism diversification, it is possible to increase the number of rhizosphere microorganisms in which each microorganism accounts for 1% or less of the entire microorganisms in the rhizosphere of plants grown from the seeds. More specifically, a wider variety of rhizosphere microorganisms can exist in the rhizosphere. The step of treating seeds with the composition comprising the biodegradable polymer and the other steps are as described in the (The method for rhizosphere microorganism activation) section above, unless otherwise specified or inconsistent with the context.

### -The step of treating seeds with a composition comprising a biodegradable polymer-

The composition comprising the biodegradable polymer comprises a biodegradable polymer, and the composition can further comprise other components.

Specific conditions, such as the biodegradable polymer, other components, the constitution, the method of production, seeds, and seed treatment, are as described in the (The composition for rhizosphere microorganism activation) section above, unless otherwise specified or inconsistent with the context.

### -Other step-

The other step is not particularly limited, and an adequate step can be selected in accordance with the purpose. An example thereof is a step of seeding the seeds treated with the composition in soil. By seeding the seeds treated with the composition in soil, in particular, the number of rhizosphere microorganisms in which each microorganism accounts for 1% or less of the entire microorganisms is increased in the rhizosphere of plants grown from the seeds. More specifically, a wider variety of rhizosphere microorganisms exist in the rhizosphere. By seeding the seeds treated with the composition in soil, the number of rhizosphere microorganisms in which each microorganism accounts for 1% or less of the entire microorganisms can be increased.

### (The method for plant production A)

A method for plant production A comprises a step of treating seeds with a composition comprising a biodegradable polymer to activate rhizosphere microorganisms. The method for plant production A can further comprise other steps.

The other step is as described in the (The method for rhizosphere microorganism activation) section above, unless otherwise specified or inconsistent with the context.

### -The step of treating seeds with a composition comprising a biodegradable polymer to activate rhizosphere microorganisms-

The composition comprising the biodegradable polymer comprises a biodegradable polymer, and the composition can further comprise other components.

Specific conditions, such as the biodegradable polymer, other components, seeds, and conditions for seed treatment are as described in the (The composition for rhizosphere microorganism activation) section above, unless otherwise specified or inconsistent with the context.

By treating seeds with the composition comprising the biodegradable polymer, rhizosphere microorganisms can be activated.

### (The method for plant production B)

The method for plant production B comprises a step of treating seeds with a composition comprising a biodegradable polymer to promote plant growth, and the method can further comprise other steps.

The other step is as described in the (The method for rhizosphere microorganism activation) section above, unless otherwise specified or inconsistent with the context.

### -The step of treating seeds with a composition comprising a biodegradable polymer to promote plant growth-

The composition comprising the biodegradable polymer comprises a biodegradable polymer, and the composition can further comprise other components.

The biodegradable polymer, other components, seeds, and conditions for seed treatment are as described in the (The composition for rhizosphere microorganism activation) section above, unless otherwise specified or inconsistent with the context.

By treating seeds with the composition comprising the biodegradable polymer, plant growth can be promoted.

### (The method for plant production C)

The method for plant production C comprises a step of treating seeds with a composition comprising a biodegradable polymer to improve soil conditions, and the method can further comprise other steps.

The other step is as described in the (The method for rhizosphere microorganism activation) section above, unless otherwise specified or inconsistent with the context.

### -The step of treating seeds with a composition comprising a biodegradable polymer to improve soil conditions-

The composition comprising the biodegradable polymer comprises a biodegradable polymer, and the composition can further comprise other components.

Specific conditions, such as the biodegradable polymer, other components, seeds, and conditions for seed treatment are as described in the (The composition for rhizosphere microorganism activation) section above, unless otherwise specified or inconsistent with the context.

By treating seeds with the composition comprising the biodegradable polymer, soil conditions can be improved.

### (The method for producing coated seeds)

The method for producing coated seeds comprises a step of treating seeds with a composition comprising a biodegradable polymer.

The step of treating seeds with the composition comprising the biodegradable polymer is as described in the (The method for rhizosphere microorganism activation) section above, unless otherwise specified or inconsistent with the context. According to the method for seed production, coated seeds that are coated with the composition comprising the biodegradable polymer can be obtained.

### (Coated seeds)

The coated seeds comprise a biodegradable polymer on the surface. The coated seeds may further comprise other components. The coated seeds may comprise a biodegradable polymer selectively on the seed surface, or a part of the biodegradable polymer may penetrate the seeds. The biodegradable polymer and the other components are as described in the (The composition for rhizosphere microorganism activation) section above.

The seeds are produced by the method for producing coated seeds described above.

### Examples

Hereafter, the examples of the present invention are described, although the present invention is not limited to the examples.

### I. Correlation between seed coating with a biodegradable polymer and plant growth

### (Example 1: Production of coated dent corn seeds 1)

Dent corn seeds (100 g; the variety: Snow-dent "Otoha") were coated with 800 µl of an aqueous coating solution containing PHBH (poly(3-hydroxybutyrate-co-3-hydroxyhexanoate), Kaneka Corporation), polyvinyl alcohol, and a coloring dye using a coater (SATEC) to produce coated dent corn seeds. Seeds were coated while adjusting the amount of PHBH to 100 g per ton of seeds. Spray-dried particles of PHBH with particle diameters of 100 µm to 160 µm were dispersed in the aqueous coating solution and the seeds were coated therewith.

### (Comparative Example 1: Production of coated dent corn seeds 2)

Coated dent corn seeds were produced in the same manner as in Example 1, except that PHBH was not added to the aqueous coating solution.

### (Example 2: Production of coated soybean seeds 1)

Soybean seeds (100 g; the variety: Fukuyutaka) were coated with 800 µl of an aqueous coating solution containing PHBH (poly(3-hydroxybutyrate-co-3-hydroxyhexanoate), Kaneka Corporation), polyvinyl alcohol, and a coloring dye using a coater (SATEC) to produce coated soybean seeds. Seeds were coated while adjusting the amount of PHBH to 100 g per ton of seeds. Spray-dried particles of PHBH with particle diameters of 100 µm to 160 µm were dispersed in the aqueous coating solution and the seeds were coated therewith.

### (Comparative Example 2: Production of coated soybean seeds 2)

Coated soybean seeds were produced in the same manner as in Example 2, except that PHBH was not added to the aqueous coating solution.

### (Example 3: Production of dent corn plants 1)

Culture soil for field crops (Tsuchitaro, Sumitomo Forestry Landscaping Co., Ltd.) was filled into 12-cm vinyl pots, and the coated dent corn seeds produced in Example 1 were seeded at 4 grains/pot. After germination, a differently grown strain was thinned to retain 3 strains in a pot. Cultivation was performed in a glass greenhouse, and each plant was cut at a position 1 cm away from the boundary between the ground and a plant stalk 21 days after seeding to separate the aboveground part from the underground part.

The fresh weight of the aboveground part was measured. The underground part was washed with water to remove soil, dried at 80°C for 2 days, and then weighed to determine the dry weight thereof. This procedure was repeated 6 times, and the average was determined. The results are shown in the second line of Table 1. In the table, "MT-seed" indicates a ton of seeds.

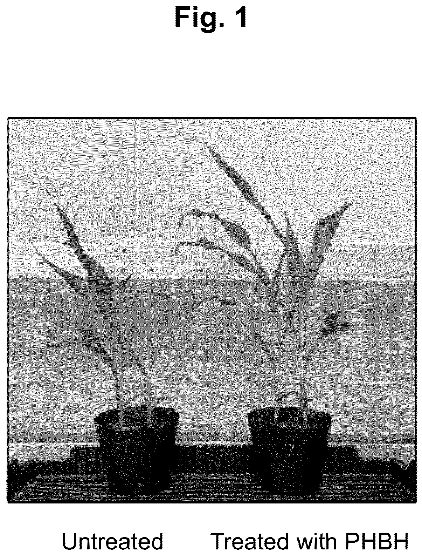

Figure 1 shows the photograph of the plant 21 days after seeding on the right side (PHBH treatment).

**Table 1**

| Test group | Fresh weight of aboveground part | | Dry weight of underground part | |
|---|---|---|---|---|
| | g | % | g | % |
| Untreated | 5.4 | 100 | 0.30 | 100 |
| PHBH 100 g/MT-seed | 6.9 | 127 | 0.35 | 118 |

### (Comparative Example 3: Production of dent corn plants 2)

Dent corn plants were produced in the same manner as in Example 3, except for the use of the coated dent corn seeds produced in Comparative Example 1 instead of the coated dent corn seeds produced in Example 1. The fresh weight of the aboveground part and the dry weight of the underground part were measured. The results are shown in the first line of Table 1.

Figure 1 shows the photograph of the plant 21 days after seeding on the left side (untreated).

### (Reference Example 1: Production of dent corn plants 3)

Dent corn plants were produced in the same manner as in Example 3, except for the use of sterile culture soil prepared by treating culture soil for field crops at 120°C for 2 hours instead of the culture soil for field crops. The fresh weight of the aboveground part and the dry weight of the underground part were measured. The results are shown in the second line of Table 2.

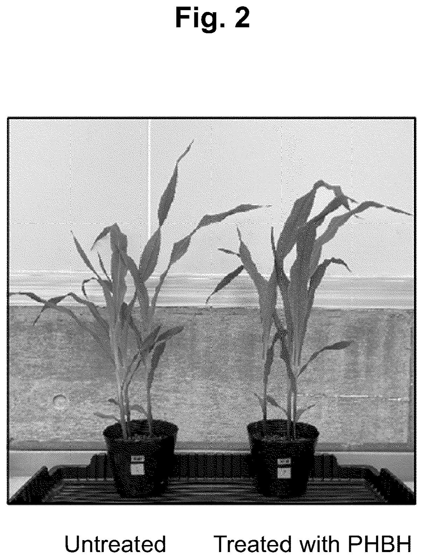

Figure 2 shows the photograph of the plant 21 days after seeding on the right side (PHBH treatment).

**Table 2**

| Test group | Fresh weight of aboveground part | | Dry weight of underground part | |
|---|---|---|---|---|
| | g | % | g | % |
| Untreated | 6.0 | 100 | 0.35 | 100 |
| PHBH 100 g/MT-seed | 6.2 | 104 | 0.35 | 98 |

### (Reference Example 2: Production of dent corn plants 4)

Dent corn plants were produced in the same manner as in Comparative Example 3, except for the use of sterile culture soil prepared by treating culture soil for field crops at 120°C for 2 hours instead of the culture soil for field crops. The dry weight of the aboveground part and that of the underground part were measured. The results are shown in the first line of Table 2.

Figure 2 shows the photograph of the plant 21 days after seeding on the left side (untreated).

The results shown in Table 1 demonstrate that, when coated dent corn seeds supplemented with a biodegradable polymer were seeded in culture soil for field crops, the dry weight of the aboveground part was increased by 27% and the dry weight of the underground part was increased by 18%, compared with those attained when coated dent corn seeds not supplemented with a biodegradable polymer were seeded.

The results shown in Table 2 demonstrate that, when sterile culture soil prepared by treating the culture soil for field crops at 120°C for 2 hours was used instead of the culture soil for field crops, effects of the biodegradable polymer were not observed.

The results demonstrate that, because culture soil for field crops contains microorganisms, the biodegradable polymer significantly promotes plant growth via microorganisms.

### (Example 4: Production of soybean plants 1)

Culture soil for field crops (Tsuchitaro, Sumitomo Forestry Landscaping Co., Ltd.) was filled into 12-cm vinyl pots, and the coated soybean seeds produced in Example 2 were seeded at 4 grains/pot. After germination, a differently grown strain was thinned to retain 3 strains in a pot. Cultivation was performed in a glass greenhouse, and the number of leaves was counted 21 days after seeding. Also, each plant was cut at a position 1 cm away from the boundary between the ground and a plant stalk to separate the aboveground part from the underground part. The underground part was washed with water to remove soil. The aboveground part and the underground part were each dried at 80°C for 2 days, and the dry weight thereof was determined. The number of root nodules was determined by removing the root nodules from the root and counting the number of the root nodules that did not pass through the 1.18-mm sieves (the root nodules of 1.18 mm or larger). The total fresh weight of the root nodules of 1.18 mm or larger was designated as the root nodule weight. This procedure was repeated 6 times, and the average was determined. The results are shown in the second line of Table 3.

**Table 3**

| Test group | Number of leaves | | Dry weight of aboveground part | | Dry weight of underground part | | Number of root nodules | | Weight of root nodules | |
|---|---|---|---|---|---|---|---|---|---|---|
| | Number | % | g | % | g | % | Number | % | g | % |
| Untreated | 1.4 | 100 | 0.57 | 100 | 0.14 | 100 | 14.3 | 100 | 0.039 | 100 |
| PHBH 100g/MT-seed | 1.6 | 112 | 0.62 | 110 | 0.16 | 114 | 23.8 | 166 | 0.088 | 225 |

### (Comparative Example 4: Production of soybean plants 2)

Soybean plants were produced in the same manner as in Example 4, except for the use of the coated soybean seeds produced in Comparative Example 2 instead of the coated soybean seeds produced in Example 2. The number of leaves, the dry weight of the aboveground part, the dry weight of the underground part, the number of root nodules, and the weight of root nodules were measured. The results are shown in the first line of Table 3.

The results shown in Table 3 demonstrate that, when coated soybean seeds supplemented with a biodegradable polymer were seeded in culture soil for field crops, the number of leaves was increased by 12%, the dry weight of the aboveground part was increased by 10%, the dry weight of the underground part was increased by 14%, the number of root nodules was increased by 66%, and the weight of root nodules was increased by 125%, compared with those attained when coated soybean seeds not supplemented with a biodegradable polymer were seeded.

### II. Correlation between seed coating with a biodegradable polymer and rhizosphere microbial flora

### (Test Example 1: Analysis of microbial flora 1)

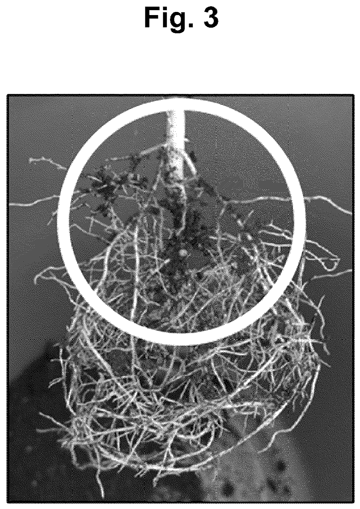

Culture soil for field crops (Tsuchitaro, Sumitomo Forestry Landscaping Co., Ltd.) was filled into 9-cm vinyl pots, and the coated soybean seeds produced in Example 2 were seeded. Cultivation was performed in a glass greenhouse, and rhizospheric soil (the soil that has adhered to the root in the region indicated in a circle in Figure 3) was collected using a brush 19 days after seeding. The collected rhizospheric soil was subjected to amplicon sequence analysis (Bioengineering Lab. Co., Ltd.) to analyze the rhizosphere microorganisms. On the basis of the results obtained, the proportion of the rhizosphere microorganisms was determined. Also, gene functions were predicted.

### (Test Example 2: Analysis of microbial flora 2)

The rhizosphere microorganisms were analyzed in the same manner as in Test Example 1, except for the use of the coated soybean seeds produced in Comparative Example 2 instead of the coated soybean seeds produced in Example 2.

When the rhizosphere microorganisms were classified in accordance with the genera, the total number of microorganisms detected was 379 species, and 170 species were found to exhibit an increase in the proportion by 5% or more. Among the 170 species exhibiting an increase in the proportion by 5% or more, 58 species were assigned to the genus level. Among the 58 species assigned to the genus level, 32 species were reported to be PGPR, and 3 species were deduced to function as PGPR while the genera thereof remained unknown. That is, 35 species (60.3%) were deduced to be PGPR in total.

Concerning the 35 species, names of genera (or names of orders), the proportion (%), an increase in the proportion relative to that of Untreated group (%), and known functions are shown in Table 4.

The results shown in Table 4 demonstrate that the biodegradable polymer has effects of increasing the proportion of plant growth-promoting rhizobacteria. The results also demonstrate that rare species accounting for 1% or less of all microorganisms would be increased to a significant extent, when cultivated with the use of seeds comprising the biodegradable polymer on the surface. When cultivated with the use of seeds comprising the biodegradable polymer on the surface, in particular, plant growth-promoting rhizobacteria that were not detected without the use of seeds comprising the biodegradable polymer became detectable. This indicates that rhizosphere microorganisms are diversified.

Concerning the plant growth-promoting fungi (PGPF), for example, the proportion of *Mortierella* and that of *Penicillium citrinum* were increased.

The proportion (%) of *Mortierella* was 0.5% in Untreated group. As a result of cultivation thereof with the use of seeds comprising the biodegradable polymer on the surface, the proportion (%) was increased to 2.3%, and an increase in the proportion (%) relative to that of Untreated group was 488%.

The proportion (%) of *Penicillium citrinum* was 0.9% in Untreated group. As a result of cultivation thereof with the use of seeds comprising the biodegradable polymer on the surface, the proportion (%) was increased to 1.1%, and an increase in the proportion (%) relative to that of Untreated group was 125%.

**Table 4**

| Bacterial species | Classification | Increase in proportion relative to Untreated group (%) | Functions |
|---|---|---|---|
| *Burkholderiales* | Order | 1900 | Associated with nitrogen cycle |
| *Micromonosporaceae* | Family | 730 | Associated with nitrogen cycle |
| *Acetobacteraceae* | Family | 251 | Associated with nitrogen cycle |
| *Methylosinus* | Genus | 279 | Associated with nitrogen cycle and methane cycle |
| *Methylocaldum* | Genus | 274 | Associated with nitrogen cycle and methane cycle |
| *Methanosarcina* | Genus | 259 | Associated with nitrogen cycle and methane cycle |
| *Clostridium* | Genus | 229 | Associated with nitrogen cycle |
| *Flavobacterium* | Genus | 229 | Associated with nitrogen cycle |
| *Bacillus* | Genus | 225 | Associated with nitrogen cycle and phytohormone production |
| *Nocardia* | Genus | 203 | Associated with nitrogen cycle (promoting root nodule formation) |
| *Opitutus* | Genus | 190 | Associated with nitrogen cycle |
| *Ardenscatena* | Genus | 139 | Associated with nitrogen cycle |
| *Planctomyces* | Genus | 129 | Associated with nitrogen cycle |
| *Mesorhizobium* | Genus | 122 | Associated with nitrogen cycle (a type of rhizosphere microorganisms) |
| *Hyphomicrobium* | Genus | 112 | Associated with nitrogen cycle and methane cycle |
| *Streptomyces* | Genus | 110 | Associated with nitrogen cycle |
| *Phenylobacterium* | Genus | 109 | Associated with nitrogen cycle |
| *Nitrosovibrio* | Genus | Not detected in Untreated group | Associated with nitrogen cycle |
| *Ammoniphilus* | Genus | Not detected in Untreated group | Associated with nitrogen cycle |
| *Clostridium* | Genus | Not detected in Untreated group | Associated with nitrogen cycle |
| *Candidatus Solibacter* | Genus | Not detected in Untreated group | Associated with nitrogen cycle |
| *Desulfobacca* | Genus | Not detected in Untreated group | Associated with nitrogen cycle |
| *Methanocella* | Genus | Not detected in Untreated group | Associated with nitrogen cycle and methane cycle |
| *Ureibacillus* | Genus | 270 | Effects of plant growth promotion |
| *Pseudoxanthomonas* | Genus | 267 | Effects of plant growth promotion |
| *Geobacillus* | Genus | 262 | Effects of plant growth promotion |
| *Phaeospirillum* | Genus | 243 | Effects of plant growth promotion |
| *Janthinobacterium* | Genus | 223 | Effects of plant growth promotion |
| *Novosphingobium* | Genus | 204 | Effects of plant growth promotion |
| *Cellulosimicrobium* | Genus | 130 | Effects of plant growth promotion |
| *Lysinibacillus* | Genus | Not detected in Untreated group | Effects of plant growth promotion |
| *Mycoplana* | Genus | Not detected in Untreated group | Effects of plant growth promotion |
| *Dactylosporangium* | Genus | Not detected in Untreated group | Effects of plant growth promotion |
| *Symbiobacterium* | Genus | 265 | Symbiotic *Bacillus* species |
| *Crenothrix* | Genus | 117 | Iron oxidation |

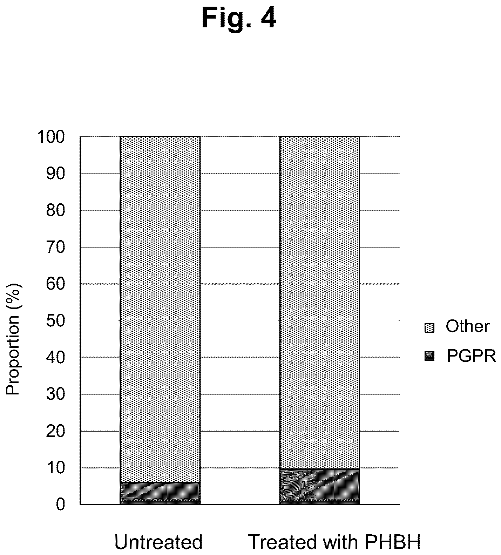

The rates of microorganisms deduced to be PGPR relative to all the microorganisms detected in Test Example 1 and Test Example 2 were calculated. The results are shown in Figure 4. In Test Example 2 (without PHBH treatment), the proportion of PGPR microorganisms was found to be 5.9% among 26 bacterial species. In Test Example 1 (with PHBH treatment), in contrast, the proportion of PGPR microorganisms was found to be 9.6% in 35 bacterial species.

As a results of prediction of gene functions that may be associated with plant growth promotion of Test Example 1 and Test Example 2, the genes shown in Table 5 were found to increase the microorganisms of interest in Test Example 1, in comparison with Test Example 2. The results shown in Table 5 demonstrate that, in rhizosphere microbial flora of plants grown from seeds coated with PHBH, microorganisms carrying genes associated with plant growth promotion were increased as a whole.

**Table 5**

| Gene functions | With/without PHBH (%) | Association with growth |
|---|---|---|
| Allantoin degradation IV (anaerobic) | 157 | Increase in genes associated with nitrogen fixation/metabolic pathway |
| Methanogenesis from acetate | 152 | Increase in genes associated with methane production/metabolic pathway |
| Methanogenesis from H² and CO² | 197 | |
| Nitrogenase | 107 | Nitrogen fixation |
| nifD | 107 | |
| nifH | 106 | |
| Nitrogen regulatory protein PII 1 | 540 | |
| Nitrogen regulatory protein PII 2 | 540 | |
| Bacillolysin | 303 | Enzyme of *Bacillus* species |

### III. Difference in effects of seed coating with a biodegradable polymer depending on soil types

### (Example 5: Production of coated dent corn seeds 3)

A coating slurry containing 50% by mass of PHBH microparticles was prepared by adding polyvinyl alcohol and a coloring dye to a slurry containing PHBH microparticles (average particle diameter: 2 µm, Kaneka Corporation). Dent corn seeds (the variety: Snow-dent "Otoha") were coated with the coating slurry using a coater (SATEC) while adjusting the amount of slurry coating to 200 g (the amount of PHBH coating: 100 g) per ton of seeds.

### (Comparative Example 5: Production of coated dent corn seeds 4)

Coated dent corn seeds were produced in the same manner as in Example 5, except that PHBH was not added to the coating slurry (an aqueous solution only).

### (Example 6: Production of dent corn plants 5)

Culture soil for field crops (Tsuchitaro, Sumitomo Forestry Landscaping Co., Ltd., supplemented with useful microorganisms) was filled into 9-cm vinyl pots, and the coated dent corn seeds produced in Example 5 were seeded at 1 grain/pot. Cultivation was performed in a glass greenhouse. In the greenhouse, the highest temperature was 24°C, the lowest temperature was 18°C, and a day length was 14 hours. Each plant was cut at a position 1 cm away from the boundary between the ground and a plant stalk 21 days after seeding to separate the aboveground part from the underground part. The fresh weight of the aboveground part was measured. The underground part was washed with water to remove soil, dried at 80°C for 2 days, and then weighed to determine the dry weight thereof. This procedure was repeated 8 times, and the average was determined. The seeds produced in Comparative Example 5 were cultivated and the growth thereof was promoted in the same manner. Table 6 shows an increase (%) in the fresh weight of the aboveground part and that in the dry weight of the underground part attained with the use of the seeds of Example 5, relative to those attained with the use of the seeds of Comparative Example 5. The test was performed 2 times.

### (Example 7: Production of dent corn plants 6)

Dent corn plants were cultivated and subjected to measurement in the same manner as in Example 6, except for the use of a different type of culture soil for field crops (Tane Baido 1, Sumitomo Forestry Landscaping Co., Ltd., supplemented with useful microorganisms).

### (Example 8: Production of dent corn plants 7)

Dent corn plants were cultivated and subjected to measurement in the same manner as in Example 6, except for the use of a different type of culture soil for field crops (Nae Ichiban, Inochio Holdings Inc., supplemented with useful microorganisms).

### (Reference Example 3: Production of dent corn plants 8)

Dent corn plants were cultivated and subjected to measurement in the same manner as in Example 6, except for the use of a different type of culture soil for field crops (Sakata Super Mix A, Sakata Seed Corporation, not specified to be "supplemented with useful microorganisms").

### (Reference Example 4: Production of dent corn plants 9)

Dent corn plants were cultivated and subjected to measurement in the same manner as in Example 6, except for the use of a different type of culture soil for field crops (Ikubyo baido, Takii & Co., Ltd., not supplemented with useful microorganisms).

Table 6 shows the results of Examples 6 to 8 and Reference Examples 3 and 4. In the dent corn plants of Examples 6 to 8 cultivated in soil supplemented with useful microorganisms, an increase in the plant weight was observed both in the aboveground part and the underground part with the use of the seeds coated with PHBH. In the dent corn plants of Reference Example 3 cultivated in soil that is not specified to be supplemented with useful microorganisms, in contrast, an increase in the plant weight was observed in the first test, but no increase was observed in the second test. That is, the results were not reproducible. In the dent corn plants of Reference Example 4 cultivated in soil not supplemented with useful microorganisms, an increase in the plant weight was not observed in neither the first test nor the second test. The results demonstrate that effects of PHBH coating are observed in soil supplemented with useful microorganisms.

**Table 6**

| Culture soil | Useful microorganisms | Results of first test | | Results of second test | |
|---|---|---|---|---|---|
| | | Aboveground part | Underground part | Aboveground part | Underground part |
| Tsuchitaro | Supplemented | +13% | +15% | +21% | +26% |
| Tane Baido 1 | Supplemented | +18% | +6% | +18% | +16% |
| Nae Ichiban | Supplemented | +8% | +10% | +17% | +19% |
| Super Mix A | Not specified | +9% | +15% | -1% | +3% |
| Ikubyo baido | Not supplemented | -3% | -7% | -2% | ±0% |

### (Example 9: Production of coated soybean seeds 3)

A coating slurry containing 50% by mass of PHBH microparticles was prepared by adding polyvinyl alcohol and a coloring dye to a slurry containing PHBH microparticles (average particle diameter: 2 µm, Kaneka Corporation). Soybean seeds (the variety: Fukuyutaka) were coated with the coating slurry using a coater (SATEC) while adjusting the amount of slurry coating to 200 g (the amount of PHBH coating: 100 g) per ton of seeds.

### (Comparative Example 6: Production of coated soybean seeds 4)

Coated soybean seeds were produced in the same manner as in Example 9, except that PHBH was not added to the coating slurry.

### (Example 10: Production of soybean plants 3)

Culture soil for field crops (Tsuchitaro, Sumitomo Forestry Landscaping Co., Ltd., supplemented with useful microorganisms) was filled into 9-cm vinyl pots, and the coated soybean seeds produced in Example 9 were seeded at 3 grains/pot. The plants were thinned to retain a strain in a pot in the end. Cultivation was performed in a glass greenhouse. In the greenhouse, the highest temperature was 28°C, the lowest temperature was 18°C, and a day length was 14 hours. Each plant was cut at a position 1 cm away from the boundary between the ground and a plant stalk 21 days after seeding to separate the aboveground part from the underground part. The fresh weight of the aboveground part was measured. The underground part was washed with water to remove soil, dried at 80°C for 2 days, and then weighed to determine the dry weight thereof. This procedure was repeated 8 times, and the average was determined. The seeds produced in Comparative Example 5 were cultivated and the growth thereof was promoted in the same manner. Table 7 shows an increase (%) in the fresh weight of the aboveground part and that in the dry weight of the underground part attained with the use of the seeds of Example 9, relative to those attained with the use of the seeds of Comparative Example 6.

### (Example 11: Production of soybean plants 4)

Soybean plants were cultivated and subjected to measurement in the same manner as in Example 10, except for the use of a different type of culture soil for field crops (Tane Baido 1, Sumitomo Forestry Landscaping Co., Ltd., supplemented with useful microorganisms).

### (Example 12: Production of soybean plants 5)

Soybean plants were cultivated and subjected to measurement in the same manner as in Example 10, except for the use of a different type of culture soil for field crops (Nae Ichiban, Inochio Holdings Inc., supplemented with useful microorganisms).

### (Reference Example 5: Production of soybean plants 6)

Soybean plants were cultivated and subjected to measurement in the same manner as in Example 10, except for the use of a different type of culture soil for field crops (Sakata Super Mix A, Sakata Seed Corporation, not specified to be supplemented with useful microorganisms).

### (Reference Example 6: Production of soybean plants 7)

Soybean plants were cultivated and subjected to measurement in the same manner as in Example 10, except for the use of a different type of culture soil for field crops (Ikubyo baido, Takii & Co., Ltd., not supplemented with useful microorganisms).

Table 7 shows the results of Examples 10 to 12 and Reference Examples 5 and 6. In the soybean plants of Examples 10 to 12 cultivated in soil supplemented with useful microorganisms, an increase in the plant weight was observed both in the aboveground part and the underground part with the use of the seeds coated with PHBH. In the soybean plants of Reference Example 5 cultivated in soil that is not specified to be supplemented with useful microorganisms, in contrast, an increase in the plant weight induced by PHBH coating was not observed, and substantially no root nodules were observed. In the soybean plants of Reference Example 6 cultivated in soil not supplemented with useful microorganisms, an increase in the plant weight induced by PHBH coating was not observed. In addition, no root nodules were observed. The results demonstrate that effects of PHBH coating on the growth of soybean plants are observed in soil supplemented with useful microorganisms.

**Table 7**

| Culture soil | Useful microorganisms | Dry weight of aboveground part | Dry weight of underground part | Number of root nodules | Weight of root nodules (FW) |
|---|---|---|---|---|---|
| Tsuchitaro | Supplemented | +11% | +6% | +35% | +27% |
| Tane Baido 1 | Supplemented | +14% | +9% | +42% | +56% |
| Nae Ichiban | Supplemented | +16% | +20% | +37% | +75% |
| Super Mix A | Not specified | +3% | -6% | - | - |
| Ikubyo baido | Not supplemented | -3% | -1% | - | - |

### IV. Comparison of effects of seed coating depending on the amount of biodegradable polymer coating

### (Examples 13 to 15: Production of coated dent corn seeds 5 to 7)

Dent corn seeds were coated in the same manner as in Example 5, except that the amount of slurry coating per ton of seeds was changed to 100 g (Example 13), 1000 g (Example 14), and 2000 g (Example 15), respectively.

### (Examples 16 to 19: Production of dent corn plants 10 to 13)

The seeds of Example 13, Example 5, Example 14, and Example 15 were cultivated under the same conditions as employed in Example 6. The test was performed once. In addition to the fresh weight of the aboveground part and the dry weight of the underground part of plants, the plant height, the number of leaves, and the density were measured. The seeds produced in Comparative Example 5 were cultivated under the same conditions, the resulting plants were subjected to measurement, the results were designated to be 100%, and the percentage of an increase of each example relative thereto was determined.

The results are shown in Table 8. The results demonstrate that plant growth would be promoted when the amount of slurry coating is 100 g or more per ton of seeds; i.e., when the amount of PHBH coating is 50 g or more per ton of seeds.

**Table 8**

| | Amount of treatment (per ton of seeds) | Plant height | | Number of leaves | | Fresh weight of aboveground part | | Density | | Dry weight of underground part | |
|---|---|---|---|---|---|---|---|---|---|---|---|
| | | cm | % | Number | % | g | % | g/cm | % | g | % |
| Untreated | - | 35.6 | 100 | 2.4 | 100 | 3.0 | 100 | 0.084 | 100 | 0.14 | 100 |
| PHBH slurry | 100 g | 36.2 | 102 | 2.4 | 99 | 3.2 | 106 | 0.083 | 99 | 0.16 | 113 |
| | 200 g | 40.8 | 115 | 2.5 | 105 | 3.7 | 123 | 0.091 | 108 | 0.18 | 127 |
| | 1000 g | 37.7 | 106 | 2.5 | 101 | 3.5 | 114 | 0.089 | 106 | 0.17 | 120 |
| | 2000 g | 42.1 | 118 | 2.6 | 105 | 4.0 | 133 | 0.095 | 113 | 0.19 | 135 |

### V. Comparison of effects of seed coating depending on biodegradable polymer types

### (Example 20: Production of coated dent corn seeds 8)

Dent corn seeds (100 g; the variety: Snow-dent "Otoha") were coated with 800 µl of an aqueous coating solution containing PLA (polylactic acid), polyvinyl alcohol, and a coloring dye using a coater (SATEC) to produce coated dent corn seeds. Seeds were coated while adjusting the amount of PLA to 100 g per ton of seeds. The average particle diameter of PLA was 100 µm. PLA was dispersed in the aqueous coating solution and seeds were coated therewith.

### (Example 21: Production of coated dent corn seeds 9)

Dent corn seeds (100 g; the variety: Snow-dent "Otoha") were coated with 800 µl of an aqueous coating solution containing PBAT (polybutylene agipate/telephtalate), polyvinyl alcohol, and a coloring dye using a coater (SATEC) to produce coated dent corn seeds. Seeds were coated while adjusting the amount of PBAT to 100 g per ton of seeds. The average particle diameter of PBAT was 100 µm. PBAT was dispersed in the aqueous coating solution and seeds were coated therewith.

### (Examples 22 to 24: Production of dent corn plants 14 to 16)

The seeds of Example 5, Example 20, and Example 21 were cultivated under the same conditions as employed in Example 6. The test was performed once. In addition to the fresh weight of the aboveground part and the dry weight of the underground part of plants, the plant height, the number of leaves, and the density were measured. The seeds produced in Comparative Example 5 were cultivated under the same conditions, the resulting plants were subjected to measurement, the results were designated to be 100%, and the percentage of an increase of each example relative thereto was determined.

The results are shown in Table 9. All of the 3 types of biodegradable plastic materials were found to exert effects of growth promotion. PHBH was found to exert the highest effects. Meanwhile, biomass-based plastic materials PHBH and PLA were found to exert higher effects than a petroleum-based biodegradable plastic material PBAT.

**Table 9**

| Normal conditions | Plant height | | Number of leaves | | Fresh weight of aboveground part | | Density | | Dry weight of underground part | |
|---|---|---|---|---|---|---|---|---|---|---|
| | cm | % | Number | % | g | % | g/cm | % | g | % |
| Untreated | 43.0 | 100 | 3.2 | 100 | 3.6 | 100 | 0.083 | 100 | 0.15 | 100 |
| PHBH slurry | 44.5 | 103 | 3.3 | 104 | 4.2 | 115 | 0.093 | 112 | 0.18 | 120 |
| PLA | 44.1 | 102 | 3.3 | 101 | 3.9 | 109 | 0.088 | 106 | 0.17 | 114 |
| PBAT | 44.0 | 102 | 3.2 | 100 | 3.7 | 102 | 0.084 | 101 | 0.17 | 110 |

The present invention include, for example, the following aspects.
<1> A composition for rhizosphere microorganism activation comprising a biodegradable polymer.
<2> The composition for rhizosphere microorganism activation according to <1>, wherein the biodegradable polymer is a biomass (bioresource)-derived biodegradable polymer.
<3> The composition for rhizosphere microorganism activation according to <1> or <2>, wherein the biodegradable polymer is polyhydroxyalkanoate (PHA).
<4> The composition for rhizosphere microorganism activation according to any of <1> to <3>, wherein the biodegradable polymer is poly(3-hydroxybutyrate-co-3-hydroxyhexanoate) (PHBH).
<5> The composition for rhizosphere microorganism activation according to any of <1> to <4>, wherein the biodegradable polymer is contained in the microparticulate form.
<6> The composition for rhizosphere microorganism activation according to <5>, wherein the microparticles have average particle diameters of 0.1 µm to 500 µm.
<7> The composition for rhizosphere microorganism activation according to any of <1> to <6>, wherein the rhizosphere microorganism activation is an increase in the proportion of plant growth-promoting rhizobacteria and/or plant growth-promoting fungi.
<8> The composition for rhizosphere microorganism activation according to <7>, wherein the plant growth-promoting rhizobacteria and/or plant growth-promoting fungi have functions of nitrogen fixation, phosphorus solubilization, potassium solubilization, phytohormone production, exopolysaccharide (EPS) production, siderophore production, or 1-aminocyclopropane-1-carboxylate (ACC) deaminase production.
<9> The composition for rhizosphere microorganism activation according to any of <1> to <8>, wherein the rhizosphere microorganism activation is an increase in the proportion of rhizosphere microorganisms in which each microorganism accounts for 1% or less of the entire microorganisms.
<10> The composition for rhizosphere microorganism activation according to any of <1> to <9>, which is used for seed treatment.
<11> A composition for plant growth promotion comprising a biodegradable polymer.
<12> The composition for plant growth promotion according to <11>, wherein the biodegradable polymer is a biomass (bioresource)-derived biodegradable polymer.
<13> The composition for plant growth promotion according to <11> or <12>, wherein the biodegradable polymer is polyhydroxyalkanoate (PHA).
<14> The composition for plant growth promotion according to any of <11> to <13>, wherein the biodegradable polymer is poly(3-hydroxybutyrate-co-3-hydroxyhexanoate) (PHBH).
<15> The composition for plant growth promotion according to any of <11> to <14>, wherein the biodegradable polymer is comprised in the microparticulate form.
<16> The composition for plant growth promotion according to <15>, wherein the microparticles have average particle diameters of 0.1 µm to 500 µm.
<17> The composition for plant growth promotion according to any of <11> to <16>, wherein the rhizosphere microorganism activation is an increase in the proportion of plant growth-promoting rhizobacteria and/or plant growth-promoting fungi.
<18> The composition for plant growth promotion according to <17>, wherein the plant growth-promoting rhizobacteria and/or plant growth-promoting fungi have functions of nitrogen fixation, phosphorus solubilization, potassium solubilization, phytohormone production, exopolysaccharide (EPS) production, siderophore production, or 1-aminocyclopropane-1-carboxylate (ACC) deaminase production.
<19> The composition for plant growth promotion according to any of <11> to <18>, wherein the rhizosphere microorganism activation is an increase in the proportion of rhizosphere microorganisms in which each microorganism accounts for 1% or less of the entire microorganisms.
<20> The composition for plant growth promotion according to any of <11> to <19>, which is used for seed treatment.
<21> A composition for soil improvement comprising a biodegradable polymer.
<22> The composition for soil improvement according to <21>, wherein the biodegradable polymer is a biomass (bioresource)-derived biodegradable polymer.
<23> The composition for soil improvement according to <21> or <22>, wherein the biodegradable polymer is polyhydroxyalkanoate (PHA).
<24> The composition for soil improvement according to any of <21> to <23>, wherein the biodegradable polymer is poly(3-hydroxybutyrate-co-3-hydroxyhexanoate) (PHBH).
<25> The composition for soil improvement according to any of <21> to <24>, wherein the biodegradable polymer is comprised in the microparticulate form.
<26> The composition for soil improvement according to <25>, wherein the microparticles have average particle diameters of 0.1 µm to 500 µm.
<27> The composition for soil improvement according to any of <21> to <26>, wherein the rhizosphere microorganism activation is an increase in the proportion of plant growth-promoting rhizobacteria and/or plant growth-promoting fungi.
<28> The composition for soil improvement according to <27>, wherein the plant growth-promoting rhizobacteria and/or plant growth-promoting fungi have functions of nitrogen fixation, phosphorus solubilization, potassium solubilization, phytohormone production, exopolysaccharide (EPS) production, siderophore production, or 1-aminocyclopropane-1-carboxylate (ACC) deaminase production.
<29> The composition for soil improvement according to any of <21> to <28>, wherein the rhizosphere microorganism activation is an increase in the proportion of rhizosphere microorganisms in which each microorganism accounts for 1% or less of the entire microorganisms.
<30> The composition for soil improvement according to any of <21> to <29>, which is used for seed treatment.
<31> A method for rhizosphere microorganism activation comprising a step of treating seeds with a composition comprising a biodegradable polymer.
<32> The method for rhizosphere microorganism activation according to <31>, which comprises a step of seeding the seeds treated with the composition in soil to increase the proportion of plant growth-promoting rhizobacteria and/or plant growth-promoting fungi.
<33> A method for rhizosphere microorganism diversification comprising a step of treating seeds with a composition comprising a biodegradable polymer.
<34> The method for rhizosphere microorganism diversification according to <33>, which comprises a step of seeding the seeds treated with the composition in soil to increase the proportion of plant growth-promoting rhizobacteria and/or plant growth-promoting fungi.
<35> A method for plant production comprising a step of treating seeds with a composition comprising a biodegradable polymer to activate rhizosphere microorganisms.
<36> A method for plant production comprising a step of treating seeds with a composition comprising a biodegradable polymer to promote plant growth.
<37> A method for plant production comprising a step of treating seeds with a composition containing a biodegradable polymer to improve soil conditions.
<38> The method for plant production according to any of <35> to <37>, which comprises a step of seeding the seeds treated with the composition in soil to increase the proportion of plant growth-promoting rhizobacteria and/or plant growth-promoting fungi.
<39> Coated seeds comprising a biodegradable polymer on the surface.

All publications, patents, and patent applications cited herein are incorporated herein by reference in their entirety.

## Claims

1. A composition for rhizosphere microorganism activation comprising a biodegradable polymer.

2. The composition for rhizosphere microorganism activation according to claim 1, wherein the biodegradable polymer is a biomass (bioresource)-derived biodegradable polymer.

3. The composition for rhizosphere microorganism activation according to claim 1, wherein the biodegradable polymer is polyhydroxyalkanoate (PHA).

4. The composition for rhizosphere microorganism activation according to claim 1, wherein the biodegradable polymer is poly(3-hydroxybutyrate-co-3-hydroxyhexanoate) (PHBH).

5. The composition for rhizosphere microorganism activation according to claim 1, which comprises the biodegradable polymer in the form of microparticles.

6. The composition for rhizosphere microorganism activation according to claim 5, wherein the average particle diameter of the microparticles is 0.1 µm to 500 µm.

7. The composition for rhizosphere microorganism activation according to claim 1, wherein the rhizosphere microorganism activation is an increase in the plant growth-promoting rhizobacteria and/or an increase in the proportion of plant growth-promoting fungi.

8. The composition for rhizosphere microorganism activation according to claim 7, wherein the plant growth-promoting rhizobacteria and/or plant growth-promoting fungi have functions of nitrogen fixation, phosphorus solubilization, potassium solubilization, phytohormone production, exopolysaccharide (EPS) production, siderophore production, or 1-aminocyclopropane-1-carboxylate (ACC) deaminase production.

9. The composition for rhizosphere microorganism activation according to claim 1, wherein the rhizosphere microorganism activation is an increase in the proportion of rhizosphere microorganisms in which each microorganism accounts for 1% or less of the entire microorganisms.

10. The composition for rhizosphere microorganism activation according to claim 1, which is used for seed treatment.

11. A composition for plant growth promotion comprising a biodegradable polymer.

12. A method for rhizosphere microorganism activation comprising a step of treating seeds with a composition comprising a biodegradable polymer.

13. The method for rhizosphere microorganism activation according to claim 12, which comprises a step of seeding the seeds treated with the composition in soil to increase the proportion of plant growth-promoting rhizobacteria and/or plant growth-promoting fungi.

14. A method for plant production comprising a step of treating seeds with a composition comprising a biodegradable polymer to promote plant growth.

15. The method for plant production according to claim 14, which comprises seeding the seeds treated with the composition in soil and increasing the proportion of plant growth-promoting rhizobacteria and/or plant growth-promoting fungi.
